## Europäisches Patentamt

## European Patent Office

## Office européen des brevets

(19)

(11) Veröffentlichungsnummer: **0 069 267**
**B1**

(12) # EUROPÄISCHE PATENTSCHRIFT

(45) Veröffentlichungstag der Patentschrift:
08.05.85

(21) Anmeldenummer: 82105398.0

(22) Anmeldetag: 19.06.82

(51) Int. Cl.⁴: **C 08 G 14/06**, C 08 G 14/12, C 09 J 3/16, C 08 L 61/34

(54) **Verfahren zur Herstellung von wetterfest verleimenden Mischkondensaten.**

(30) Priorität: 01.07.81 DE 3125874
14.11.81 DE 3145328

(43) Veröffentlichungstag der Anmeldung:
12.01.83 Patentblatt 83/2

(45) Bekanntmachung des Hinweises auf die Patenterteilung:
08.05.85 Patentblatt 85/19

(84) Benannte Vertragsstaaten:
AT BE CH DE FR GB IT LI NL SE

(56) Entgegenhaltungen:
FR - A - 1 284 233
FR - A - 2 092 232
FR - A - 2 163 108

(73) Patentinhaber: BASF Aktiengesellschaft,
Carl-Bosch-Strasse 38, D-6700 Ludwigshafen (DE)

(72) Erfinder: Diem, Hans, Dr., Feldbergstrasse 63,
D-6800 Mannheim (DE)
Erfinder: Fritsch, Robert, An der Neumuehle 2,
D-6724 Dudenhofen (DE)
Erfinder: Lehnert, Heinz,
Anselm-Feuerbach-Strasse 11 F, D-6710 Frankenthal
(DE)
Erfinder: Matthias, Guenther, Dr., Meergartenweg 25a,
D-6710 Frankenthal (DE)
Erfinder: Schatz, Hermann, Neubergstrasse 50,
D-6730 Neustadt (DE)
Erfinder: Wittmann, Otto, Max-Beckmann-Strasse 13b,
D-6710 Frankenthal (DE)

0 069 267

**Beschreibung**

Aus der DE-PS 2 020 481 ist es bekannt, wetterfest verleimende Mischkondensate von Formaldehyd mit Harnstoff, Melamin und einer untergeordneten Menge eines Phenols herzustellen, wobei es auf eine bestimmte Reihenfolge von Maßnahmen bei der Kondensation ankommt.

Die erhaltenen Kondensate sind indes in wäßriger Lösung — wie die meisten Aminoplast-Kondensate — nur beschränkt löslich und zwar in dem Sinne, daß sie bei abnehmender Konzentration ausfallen und Klumpen bilden, die stark kleben und den Umgang mit den Harzlösungen sehr lästig gestalten. Eine Beseitigung dieser bekannten Erscheinung ist nur in manchen Fällen durch einschneidende chemische Veränderung der Kondensate möglich, die aber bei dem vorgesehenen Verwendungszweck der Harze als Leime praktisch ausscheidet.

Ein weiterer Nachteil der oben genannten Mischkondensate besteht darin, daß sie — in ausgehärtetem Zustand — leicht Formaldehyd abgeben und daher nur für Holzwerkstoffe verwendbar sind, bei denen dieser Nachteil nicht stört. Zunehmendes Umweltbewußtsein bewirkt aber auch hier, daß man nach chemisch weniger labilen Mitteln zur Holzverleimung sucht.

Die Erfindung betrifft daher ein Verfahren zur Herstellung wäßriger Lösungen von als Leimharzen verwendbaren Kondensationsprodukten aus Formaldehyd und mindestens Harnstoff, Melamin und Phenol, wobei der Molanteil von Phenol, bezogen auf die Summe von Melamin und Harnstoff bis zu 0,25 und das Molverhältnis von Harnstoff zu Melamin 0,2 : 1 bis 1 : 0,2 beträgt, bei einem Gesamtmolverhältnis von Formaldehyd zur Summe aus Melamin, Harnstoff und Phenol von etwa 1,1 bis 2, bei dem man jeweils für sich

a)  Phenol, Formaldehyd und bis zu 0,35 Mol eines Alkalisulfits oder -hydrogensulfits je mol Phenol zu einem Phenol-Formaldehyd-Kondensats sowie

b)  Formaldehyd und Harnstoff im Molverhältnis von 2,5 oder weniger zu einem Harnstoff-Formaldehydkondensat umsetzt und

c)  die Umsetzungsprodukte (a) und (b) zusammen ihrerseits mit Melamin und Formaldehyd in solchem Verhältnis umsetzt, daß sich die eingangs genannten Molverhältnisse von Melamin, Harnstoff, Phenol und Formaldehyd entweder unmittelbar ergeben oder

d)  gegebenenfalls erst nach einer weiteren Umsetzung des gemäß c) erhaltenen Produkts mit Harnstoff in Mengen bis zu 75% der insgesamt vorgesehenen Harnstoffmenge.

Die Erfindung löst die Aufgabe, beim Verdünnen dispergierende und nach der Verarbeitung weniger Formaldehyd freisetzende Harze zu schaffen, in Abkehr von dem bisherigen Prinzip, Phenol nachträglich zusammen mit Formaldehyd in vorgebildete Aminoplastkondensate einzukondensieren dadurch, daß man zunächst ein Umsetzungsprodukt von Phenol und Formaldehyd mit Alkalisulfit oder -hydrogensulfit herstellt und dieses vor oder während der Kondensation der aminoplastischen Harzbestandteile diesen zusetzt, wobei vermutlich in mehr oder minder großem Umfang auch eine Umsetzung zwischen dem sulfit-modifizierten Phenoplasten und dem Aminoplasten stattfindet.

Die Herstellung sulfit-modifizierter Phenol-Formaldehyd-Kondensate ist bekannt und spielt für die Gewinnung künstlicher Gerbstoffe eine Rolle — vgl. z. B. DE-PSen 87 335, 696 581, 2 158 610; US-PS 2 522 569. Die chemischen Zusammenhänge sind z. B. in J. Org. Chem. 10, 477 ff (1945) erörtert.

Auch sulfit-modifizierte Aminoplastharze sind technisch schon für die Herstellung naßfester Papiere verwendet worden; hierbei kommt es darauf an, die Aminoplaste wasserlöslich zu machen, damit sie sich beim Blattbildungsprozeß auf der Papiermaschine hinreichend verdünnen lassen (vgl. US-PS 2 407 599).

Die Tatsache, daß Aminoplaste durch die Modifizierung mit Sulfaten, d. h. den Einbau von Sulfonsäure-Resten wasserverträglich werden, bedeutet indes für die Aufgabe, Leimharze herzustellen, kein anwendbares Wissen.

Leimharze sollen nämlich, jedenfalls in ausgehärtetem Zustand, so wenig wie möglich durch Wasser angreifbar sein. Diese Voraussetzung legt den Einbau von Sulfonsäuren-Resten in Leimharze nicht nur nicht nahe, sondern führt von der Erfindung weg.

Daß die vorstehenden Überlegungen richtig sind, geht z. B. aus folgendem hervor:

An sich gibt es nach den Erfindungen mit chemisch einheitlichen Kondensaten gute Gründe anzunehmen, daß die Gegenwart besonders von Melaminkondensaten, die besonders stark zur Klumpenbildung neigen, zu schweren Störungen beim Verdünnen führt. Der Versuch, nun gerade in die Melaminkondensate Sulfit einzuführen, führt aber hier nicht zur Lösung des Problems, ebensowenig wie der Sulfitzusatz zur Summe aller Reaktionsteilnehmer.

Die Erfindung führt im übrigen auch tatsächlich nicht zu wasserlöslichen Harzen sondern — wie gesagt — zur Wasser-Dispergierbarkeit, so daß beim Verdünnen Emulsionen entstehen, die sich technisch wie Lösungen handhaben lassen.

Die nach der Erfindung erhältlichen Harzprodukte haben weiterhin folgende Vorteile:

—  sie sind im allgemeinen mindestens 6 Wochen lagerstabil,
—  sie spalten nach der Verarbeitung zu Holzwerkstoffen gewöhnlich weniger als 10 mg/100 g For-

2

maldehyd ab (gemessen nach der FESYP-Methode),
— sie weisen eine ausreichende Koch- bzw. Naßfestigkeit auf,
— sie sind auch bei tiefer Temperatur (z. B. +5°) noch gut pumpbar.

Die detaillierte Beschreibung der Erfindung wird am besten durch Verfahrensstufen oder -schritte beschrieben, wobei im folgenden die üblichen Abkürzungen für Phenol (P), Melamin (M), Harnstoff (U), Formaldehyd (F) sowie S für das Sulfit und M.V. für das Molverhältnis des Formaldehyds zum jeweils beteiligten Reaktionsteilnehmer(n) verwendet werden.

Danach gilt für Stufe 1, d. h. P + F + S → Kondensat 1 (PFS) folgendes:

M.V. (F : P) = 1 bis 10
M.V. (S : P) = 0,02 bis 0,35
pH: etwa 7,5 bis 12
T: etwa 50 bis 150° C (ggf. unter Druck)
Viskosität: z. B. 100 bis 15.000 mPa · s, je nach Kondensationsgrad und Konzentration (etwa 30 bis 80% Feststoffgehalt)

Die Umsetzung als solche ist, wie eingangs erwähnt, an sich bekannt, wobei als Phenol außer dem Grundkörper auch Kresole oder deren technische Gemische zu empfehlen sind.

Als Alkalisulfit oder -hydrogensulfit wird gewöhnlich das Natriumsalz verwendet werden, eine etwa noch erforderliche Einstellung des pH-Wertes geschieht dann zweckmäßig mit Natronlauge; die Kalisalze können natürlich ebenso verwendet werden.

Bevorzugt ist ein Molverhältnis (F : P) von 1,5 bis 3 und besonders 1,8 bis 2,5, ein Molverhältnis (S : P) von 0,05 bis 0,3 und besonders 0,1 bis 0,25 sowie ein pH-Wert von 8 bis 10 und besonders 8,5 bis 9,5.

Die aus technisch (apparativer) Sicht günstigste Reaktionstemperatur liegt bei 80 bis 95° C, d. h. man kondensiert bei atmosphärischem Druck und der höchsten Temperatur, die ohne größere Verdampfungsverluste erreichbar ist. Kondensation unter Druck und entsprechend höherer Temperatur ist natürlich grundsätzlich möglich.

Wegen der Handhabung der Lösungen ist ein Feststoffgehalt an Kondensat von etwa 55 bis 65% üblich, der auch im vorliegenden Falle befriedigt.

Die zur Umsetzung benötigten Harnstoffharze (UF) im Molverhältnis von 2 oder weniger bzw. deren Lösungen sind allgemein bekannt und auch handelsüblich; zu ihrer Herstellung sind keine besonderen Hinweise erforderlich. Die Lösungen haben meist einen Feststoffgehalt von etwa 50 bis 70%, der auch für die Zwecke der Erfindung befriedigt.

Die Kondensate PFS der oben als Stufe 1 bezeichneten Umsetzung, die Harnstoffharze UF, Melamin und weiterer Formaldehyd werden nun zu den erfindungsgemäßen Harzen umgesetzt.

Dabei ist es möglich, von vornherein die Mengen an PFS, UF, M und F so zu wählen, daß sich die Zielprodukte des Verfahrens, nämlich Harze mit bis zu 0,25 mol Phenol je mol Aminoplastbildner (U+M), 0,2 bis 1 mol Harnstoff je mol Melamin (bzw. mol M je mol U) sowie ein Gesamtverhältnis von Formaldehyd zur Summe M + P + U von etwa 1,1 bis 2 ergeben.

So sind Harze bevorzugt, bei denen die wirksame Menge an Phenol im Bereich von 0,05 bis 0,25 mol/mol, bezogen auf die Summe von Melamin und Harnstoff liegt. Auch Harze, deren Phenolanteil geringer als 0,05 mol/mol, bezogen auf die Summe von Melamin und Harnstoff ist, zeigen noch die erfindungsgemäßen Vorteile.

Die geringste Menge, die erfahrungsgemäß noch einen merkbaren Vorteil hinsichtlich der klumpenfreien Verdünnbarkeit mit Wasser bringt, ist etwa 0,02 mol/mol; dies hängt im Einzelfall von den Umständen der Kondensationsführung ab.

Nach einem anderen, bevorzugten Verfahren wählt man die Mengenverhältnisse für das Zielprodukt grundsätzlich gleich, hält jedoch einen Teil des rechnerisch benötigten Harnstoffs zurück und setzt diesen erst zum Schluß der Umsetzung in einem dritten Verfahrensschritt zu.

Praktisch bedeutet dies, daß die vorgesehene Menge an Kondensat der Stufe 1 (PFS), etwas weniger UF und etwas mehr F mit der vorgesehenen Menge M umgesetzt werden (Stufe 2) und die rechnerisch fehlende Menge U erst zum Schluß zugesetzt wird (Stufe 3).

Für die Stufe 2 gilt in diesem Fall pH-Bereich, Temperatur und Viskosität wie dies für Stufe 1 beschrieben wurde; die Molverhältnisse ergeben sich dadurch, daß bis etwa Dreiviertel (75%) des ingesamt vorgesehenen Harnstoffgehalts im Zielprodukt nicht in Form des UF-Kondensats zugesetzt werden, sondern lediglich der hierauf entfallende Formaldehyd in freier Form, d. h. als übliche Lösung.

Wenn die beabsichtigte Umsetzung (Stufe 2) bis zur gewünschten Viskosität fortgeschritten ist, so läßt man zweckmäßig abkühlen und setzt währenddessen den restlichen Harnstoff zu; gewöhnlich sinkt hierbei die Viskosität, zumal es zweckmäßig ist, Harnstoff als konzentrierte wäßrige Lösung zu verwenden, die die betriebsübliche Form von Harnstoff darstellt.

Für die Erfindung ist es ohne Belang, wie weit zwischen Harnstoff und den vorgebildeten Kondensaten eine Reaktion eintritt.

Nach dem Abkühlen auf Raumtemperatur hat die Lösung einen pH-Wert um 9; sie ist unmittelbar gebrauchsfertig.

In der nachstehenden tabellarischen Übersicht sind die erfindungsgemäßen Merkmale der einzelnen Verfahrensstufen nochmals zusammengestellt.

| Merkmal | erforderlich | bevorzugt | besonders bevorzugt |
|---|---|---|---|
| **Stufe 1** | | | |
| S 1 = P + F + S | | | |
| pH | 7,5—12 | 8—10 | 8,5—9,5 |
| T (°C) | 50—150 | 70—100 | 80—95 |
| Viskosität (mPa · s) | 100—15 000 | 300—5000 | 300—1000 |
| Molverhältnisse | | | |
| F : P | 1,0—10 | 1,5—3 | 1,8—2,5 |
| S : P | 0,02—0,35 | 0,05—0,30 | 0,1—0,25 |
| Feststoffgehalt (%) | 30—80 | 40—70 | 45—65 |
| **Stufe 2** | | | |
| S 2 = S 1 + M + F + UF | | | |
| pH | 7,5—11 | 8—10 | 8,5—9,5 |
| T (°C) | 75—150 | 75—100 | 80—95 |
| Viskosität (mPa · s) | 300—2500 | 500—2000 | 600—1200 |
| Molverhältnisse: | | | |
| M : P | 20—1,2 | 10—1,6 | 7—2 |
| Harnstoffharz UF (F : U) | 1,0—2,5 | 1,0—2 | 1,1—1,9 |
| **Stufe 3** | | | |
| S 3 = S 2 + U | | | |
| pH | 7,5—11 | 8—10 | 8,5—9,5 |
| T (°C) | 10—60 | 20—50 | 25—45 |
| Viskosität (mPa · s) | 150—1000 | 200—800 | 350—650 |
| Anteil U (mol%) | bis 25 | 5—20 | 5—20 |
| Feststoffgehalt (%) | 50—75 | 60—70 | 62—66 |

Die Erfindung wird nachstehend anhand von Beispielen näher erläutert; die dabei angegebenen Teile beziehen sich, wenn nicht anders angegeben, auf das Gewicht und können z. B. durch die Bezeichnung »Kilogramm« ersetzt, als praktische Anleitung für die technische Benutzung dienen.

## Beispiel 1

Stufe 1 (S 1)  431,5 Teile wäßrige Formaldehydlösung von 40 Gewichtsprozent (5,75 Molteile $CH_2O$), 269,7 Teile (2,87 Molteile) Phenol und 44,9 Teile (0,36 Molteile) Natriumsulfit werden unter Rühren auf 60°C aufgeheizt, wobei sich das Natriumsulfit löst. Die Temperatur steigt von selbst auf 100°C an. Der pH-Wert stellt sich auf 9 ein. Die Temperatur wird auf 90°C eingestellt und beibehalten bis die Viskosität (bei 20°C) 604 mPa · s beträgt. Dann wird auf 20°C abgekühlt.

Stufe 2 (S 2)  Zu dieser Lösung werden 1488 Teile wäßriger Formaldehyd von 40 Gew.-% (19,84 Molteile $CH_2O$), 1000 Teile (7,94 Molteile) Melamin, 27 Teile (0,26 Molteile) Natriumhydrogensulfit und 1712 Teile eines Harnstoff-Formaldehyd-Kondensationsproduktes mit 65% Feststoffgehalt und einem Molverhältnis Formaldehyd zu Harnstoff gleich 1,77 gegeben. Das entspricht 20,7 Molteilen Formaldehyd und 11,7 Molteilen Harnstoff. Der pH-Wert beträgt 9,1. Die Mischung wird auf 90°C aufgeheizt und diese Temperatur beibehalten bis die Viskosität 900 mPa · s beträgt. Die Mischung wird auf 35°C abgekühlt.

Stufe 3 (S 3 )  Die Mischung wird mit 432 Teilen (7,2 Molteile) festem Harnstoff versetzt. Dabei kühlt man sie auf 25°C ab. Die Viskosität bei 20°C beträgt 480 mPa · s. Der gemessene Feststoffgehalt beträgt 63,3%.

Daraus errechnen sich folgende Molverhältnisse:

| S 1 | Phenol zu Formaldehyd | 0,5 |
|---|---|---|
| | Sulfit zu Phenol | 0,125 |
| | Feststoffgehalt (gemessen); Gew.-% | 58,3 |

| S 2 | Melamin zu Phenol | 2,77 |
|---|---|---|
| | Formaldehyd gesamt zu | |
| | Melamin plus Phenol | 4,28 |

| S 3 | Anteil Harnstoff in Gew.-%, | |
|---|---|---|
| | bezogen auf die gesamte Mischung | 8,0 |

Molverhältnisse der Gesamtmischung:

$$\frac{P}{M+U} = 0,11$$

$$\frac{U}{M} = 2,38$$

$$\frac{F}{M+U+P} = 1,56$$

Das erhaltene Leimharz ist bei Mischung mit der 3,6fachen Menge Wasser bei 20°C löslich und fällt bei weiterer Verdünnung in Form einer milchigen Trübung aus. Es setzt sich kein Niederschlag ab. Die Gelierzeit (Reaktivität) nach Zusatz von 1,5% $NH_4Cl$ bei 50°C beträgt 31 min, bei 100°C 47 s.

Die Stabilität, d. h. die Zeit einer Viskositätszunahme von 480 bis 250 mPa · s beträgt 7,5 Wochen bei 25°C.

Das Leimharz wird auf 5°C abgekühlt, die Viskosität beträgt nach 3 Monaten noch 2500 mPa · s bei 5°C, das Harz ist somit verarbeitbar. Die Viskosität bei 20°C beträgt 700 mPa · s.

## Beispiel 2

Stufe 1  381,6 Teile (5,09 Molteile $CH_2O$) 40%ige Formaldehydlösung, 238,5 Teile (2,54 Molteile) Phenol und 39,7 Teile (0,32 Molteile) Natriumsulfit werden unter Rühren auf 60°C aufgeheizt, wobei das Natriumsulfit in Lösung geht. Die Temperatur steigt auf 100°C an. Der pH-Wert stellt sich auf 9 ein. Die Temperatur wird auf 90°C eingestellt und beibehalten bis die Viskosität bei 20°C 584 mPa · s beträgt. Dann wird auf 20°C abgekühlt.

Stufe 2  Zu dieser Lösung werden 1896 Teile (25,28 Molteile $CH_2O$) Formaldehyd von 40 Gew.-%, 1250 Teile (9,92 Molteile) Melamin, 30 Teile (0,29 Molteile) Natriumhydrogensulfit und 1314 Teile eines Harnstoff-Formaldehyd-Kondensationsproduktes mit 65% Feststoffgehalt (Molverhältnis Formaldehyd zu Harnstoff gleich 1,77) gegeben. Das entspricht 15,9 Molteilen Formaldehyd und 8,98 Molteilen Harnstoff. Der pH-Wert beträgt 9. Die Mischung wird auf 90°C aufgeheizt und diese Temperatur beibehalten bis die Viskosität 930 mPa · s beträgt. Die Mischung wird auf 35°C abgekühlt.

Stufe 3 Die Mischung wird mit 840 Teilen (14,0 Molteilen) Harnstoff versetzt. Dabei kühlt sie auf 20°C ab. Die Viskosität bei 20°C beträgt 355 mPa · s. Der gemessene Feststoffgehalt beträgt 63,8%.

Daraus errechnen sich folgende Molverhältnisse:

| | | |
|---|---|---|
| S 1 | Phenol zu Formaldehyd | 0,5 |
| | Sulfit zu Phenol | 0,126 |
| | Feststoff (gem.) Gew.-% | 57,9 |
| | | |
| S 2 | Melamin zu Phenol | 3,91 |
| | Formaldehyd gesamt zu | |
| | Melamin plus Phenol | 3,71 |
| | Anteil Harnstoff in Gew.-% | |
| | bezogen auf die gesamte Menge | 14,02 |

Molverhältnisse der Gesamtmischung:

$$\frac{P}{M+U} = 0,077$$

$$\frac{U}{M} = 2,32$$

$$\frac{F}{M+U+P} = 1,31$$

Das erhaltene Leimharz ist bei Mischung mit der 3fachen Menge Wasser bei 20°C löslich und fällt bei weiterer Verdünnung in Form einer milchigen Trübung aus. Es setzt sich kein Niederschlag ab. Die Gelierzeit (Reaktivität) nach Zusatz von 1,5% $NH_4Cl$ beträgt bei 50°C 33 min, bei 100°C 45 s.

Die Lagerstabilität, d. h. die Zeit einer Viskositätszunahme von 355 bis 2500 mPa · s beträgt 12 Wochen bei 25°C.

Das Leimharz wird auf 5°C abgekühlt, die Viskosität beträgt nach 3 Monaten erst 1500 mPa · s, das Harz ist somit verarbeitbar.

## Vergleichsversuch

Stufe 1 379,6 Teile (5,06 Molteile $CH_2O$) einer 40%igen wäßrigen Formaldehydlösung, 39,8 Teile (0,42 Molteile) Phenol, 210 Teile (1,67 Molteile) Melamin, 6,6 Teile (0,05 Molteile) Natriumsulfit, 5 Teile (0,05 Molteile) Natriumhydrogensulfit und 219 Teile eines Harnstoff-Formaldehyd-Kondensationsproduktes mit 65% Feststoffgehalt (Molverhältnis Formaldehyd zu Harnstoff gleich 1,77) werden zusammengegeben. Die Molteile des UF-Harzes entsprechen 2,65 Molteilen Formaldehyd und 1,5 Molteilen Harnstoff.
Die gebildete Suspension wird unter Rühren auf 90°C aufgeheizt und diese Temperatur beibehalten, bis die Viskosität 840 mPa · s beträgt. Der pH-Wert der Mischung beträgt 9,5. Die Mischung wird auf 35°C abgekühlt.

Stufe 2 Die Mischung wird mit 140 Teilen (2,33 Molteilen) Harnstoff versetzt. Dabei kühlt sie auf 20°C ab. Die Viskosität bei 20°C beträgt 340 mPa · s. Der gemessene Feststoffgehalt beträgt 63,9%.

Daraus errechnen sich folgende Molverhältnisse:

| | |
|---|---|
| Phenol zu Formaldehyd | 0,08 |
| Sulfit zu Phenol | 0,12 |
| Melamin zu Phenol | 3,98 |
| Formaldehyd gesamt zu | |
| Melamin plus Phenol | 3,69 |

6

Anteil Harnstoff in %,
bezogen auf die gesamte Mischung　　　　14,0

Molverhältnisse der Gesamtmischung:

$$\frac{P}{M+U} = 0{,}076$$

$$\frac{U}{M} = 2{,}29$$

$$\frac{F}{M+U+P} = 1{,}30$$

Das erhaltene Leimharz ist bei Mischung mit der gleichen Menge Wasser bei 20°C gerade noch löslich und fällt bei weiterer Verdünnung in Form von großen klebrigen Fladen aus, die zum Teil an den Wandungen hängen bleiben; es bildet sich sofort ein wasserunlöslicher Niederschlag am Gefäßboden.

Die Gelierzeit (Reaktivität) nach Zusatz von 1,5% $NH_4Cl$ beträgt bei 50°C 39 min, bei 100°C 61 s.

### Beispiel 3

Stufe 1　82,1 Teile 40%ige Formaldehydlösung (1,1 Molteile $CH_2O$), 51,3 Teile (0,55 Molteile) Phenol und 8,35 Teile (0,07 Molteile) Natriumsulfit werden unter Rühren auf 60°C aufgeheizt, wobei sich das Natriumsulfit löst. Die Temperatur steigt infolge der exothermen Reaktion auf 100°C an. Der pH-Wert stellt sich auf 9,1 ein. Die Temperatur wird auf 90°C eingestellt und beibehalten bis die Viskosität bei 20°C 346 mPa · s beträgt. Dann wird auf 20°C abgekühlt. Der Feststoffgehalt beträgt 57,4 Gew.-%.

Stufe 2　Zu dieser Lösung werden 240 Teile (3,2 Molteile $CH_2O$) 40%ige Formaldehydlösung, 180 Teile (1,4 Molteile) Melamin, 5 Teile (0,05 Molteile) Natriumhydrogensulfit und 447 Teile eines Harnstoff-Formaldehyd-Kondensationsproduktes mit 65% Feststoffgehalt (Molverhältnis Formaldehyd zu Harnstoff gleich 1,77) gegeben. Das entspricht 5,4 Molteilen Formaldehyd und 3,05 Molteilen Harnstoff. Der pH-Wert beträgt 9,0. Die Mischung wird auf 90°C aufgeheizt und diese Temperatur beibehalten, bis die Viskosität bei 20°C 660 mPa · s beträgt. Die Mischung wird auf 25°C abgekühlt. Der gemessene Feststoffgehalt beträgt 64,3%.

Daraus errechnen sich folgende Molverhältnisse:

S 1　Phenol zu Formaldehyd　　　　　　0,5
　　　Sulfit zu Phenol　　　　　　　　　0,127

S 2　Melamin zu Phenol　　　　　　　　2,6
　　　Formaldehyd gesamt zu
　　　Melamin plus Phenol　　　　　　　4,9

Molverhältnisse der Gesamtmischung:

$$\frac{P}{M+U} = 0{,}12$$

$$\frac{U}{M} = 2{,}13$$

$$\frac{F}{M+U+P} = 1{,}93$$

Das erhaltene Leimharz ist bei Mischung mit der 4fachen Menge Wasser bei 20°C löslich und fällt bei weiterer Verdünnung in der Form einer milchigen Trübung aus. Es setzt sich kein Niederschlag ab.

### Beispiel 4

Stufe 1　744,8 Teile (9,93 Molteile $CH_2O$) 40 gew.-%ige Formaldehydlösung, 465,5 Teile (4,95 Molteile) Phenol und 77,6 Teile (0,62 Molteile) Natriumsulfit werden unter Rühren auf 60°C aufgeheizt,

7

wobei sich das Sulfit löst. Die Temperatur steigt infolge der exothermen Reaktion auf 100°C an. Der pH-Wert stellt sich auf 9,1 ein. Die Temperatur wird auf 90°C eingestellt und beibehalten, bis die Viskosität bei 20°C 605 mPa · s beträgt. Dann wird auf 20°C abgekühlt.

Stufe 2 Zu dieser Lösung werden 2486 Teile (33,15 Molteile CH$_2$O) Formaldehydlösung, 1288 Teile (10,2 Molteile) Melamin, 50 Teile (0,48 Molteile) Natriumhydrogensulfit und 4887 Teile eines Harnstoff-Formaldehyd-Kondensationsproduktes mit 65% Feststoffgehalt (Molverhältnis Formaldehyd zu Harnstoff gleich 1,77) gegeben. Das entspricht 59,13 Molteilen Formaldehyd und 33,39 Molteilen Harnstoff. Der ph-Wert beträgt 9,0. Die Mischung wird auf 90°C aufgeheizt und diese Temperatur beibehalten, bis die Viskosität bei 20°C 593 mPa · s beträgt. Die Mischung wird auf 20°C abgekühlt. Der gemessene Feststoffgehalt beträgt 62,9%.

Daraus errechnen sich folgende Molverhältnisse:

S 1 Phenol zu Formaldehyd        0,5
      Sulfit zu Phenol        0,125

S 2 Melamin zu Phenol        2,06
      Formaldehyd gesamt zu
      Melamin plus Phenol        6,75

Molverhältnisse der Gesamtmischung:

$$\frac{P}{M+U} = 0,11$$

$$\frac{U}{M} = 3,27$$

$$\frac{F}{M+U+P} = 2,11$$

Das erhaltene Leimharz ist bei Mischung mit der 9fachen Menge Wasser bei 20°C löslich und fällt bei niederer Verdünnung in der Form einer milchigen Trübung aus. Es setzt sich kein Niederschlag ab.

Beispiel 5

Stufe 1 3,68 Teile wäßrige Formaldehydlösung von 40 Gew.-% (49,0 Molteile CH$_2$O), 2,3 Teile (24,5 Molteile) Phenol und 0,50 Teile (4 Molteile) Natriumsulfit werden unter Rühren auf 60°C gebracht, wobei sich das Natriumsulfit löst. Die Temperatur steigt von selbst auf ca. 100°C und es stellt sich ein pH-Wert von 9,2 ein.
Die Temperatur wird auf 90°C abgesenkt und beibehalten, bis die Viskosität bei 20°C 380 mPa · s beträgt. Dann läßt man abkühlen. Der Feststoffgehalt beträgt 59,6%.

Stufe 2 Der erhaltenen Lösung werden 33,75 Teile (450 Molteile CH$_2$O) wäßriger Formaldehydlösung von 40 Gew.-%, 22,7 Teile (180,2 Molteile) Melamin und 28,08 Teile eines handelsüblichen, wäßrigen Formaldehyd-Kondensats (UF) mit 65% Feststoffgehalt (Molverhältnis zu Harnstoff: 1,77) zugesetzt. Die Menge UF entspricht 340 Molteilen Formaldehyd und 192 Molteilen Harnstoff. Der pH-Wert der Mischung beträgt 9,0. Man bringt auf 90°C und hält solange, bis die Viskosität 700 mPa · s beträgt. Sodann wird auf 35°C abgekühlt.

Stufe 3 Die erhaltene Lösung wird mit 9 Teilen (150 Molteilen) Harnstoff versetzt. Dabei kühlt man auf 25°C ab. Die Viskosität bei 20°C beträgt 398 mPa · s. Der gemessene Feststoffgehalt beträgt 62,6%.

Daraus errechnen sich folgende Molverhältnisse:

S 1 Phenol zu Formaldehyd        0,5
      Sulfit zu Phenol        0,163

S 2 Melamin zu Phenol        7,36
      Formaldehyd (gesamt) zu
      Melamin plus Phenol        4,10

S 3 Anteil Harnstoff in Gew.-% der Lösung        9,0

Molverhältnisse der Gesamtmischung:

$$\frac{P}{M+U} = 0,047$$

$$\frac{U}{M} = 1,90$$

$$\frac{F}{M+U+P} = 1,53$$

Das Leimharz ist bei Mischung mit der 2fachen Wassermenge bei 20°C löslich und fällt bei weiterer Verdünnung in Form einer milchigen Trübung aus. Es setzt sich kein Niederschlag ab.

Die Gelierzeit (Reaktivität nach Zusatz von 1,5% $NH_4Cl$ als 15%ige wäßrige Lösung) beträgt bei 50°C 30 min, bei 100°C 40 s. Die Stabilität, ausgedrückt als die Zeit, in der die Viskosität von 398 mPa · s auf 2500 mPa · s zunimmt, beträgt 12 Wochen bei 25°C.

## Anwendungstechnische Prüfung

Je 1000 Teile Harzlösung der Beispiele 1 und 2 sowie ein handelsübliches Harz entsprechender Bruttozusammensetzung wurden in üblicher Weise mit 70 Teilen Wasser, 66 Teilen 50%iger Paraffinemulsion und 88 Teilen einer handelsüblichen Härterlösung zu einer Leimharzflotte angesetzt.

Damit werden Standard-Fichtenholzspäne so beleimt, daß sich ein Harzgehalt (trocken/trocken) von 12% ergibt und eine Feuchte von 11,2%. Bei 180°C und 240 s Preßzeit werden 18 mm starke Spanplatten hergestellt.

Es wird die Wasserfestigkeit nach DIN 68 763 (V 100) und die Formaldehydabspaltung nach der FESYP-Perforatormethode bestimmt.

Die Prüfung hatte folgende Ergebnisse:

| Eigenschaft | Prüfkörper gemäß Beispiel | | Vergleich mit einem handelsüblichen Harz entsprechender Bruttozusammensetzung |
|---|---|---|---|
| Scherfestigkeit/V 100*) [N/mm²] | 1,1 | 1,1 | 1,3 |
| Formaldehydabgabe nach FESYP [mg HCHO/100 g atro**) Platte] | 22 | 8 | 44 |

*) Verleimung beständig gegen hohe Luftfeuchtigkeit (begrenzt wetterfeste Verleimung)
**) absolut trocken

## Patentansprüche

1. Verfahren zur Herstellung wäßriger Lösungen von als Leimharzen verwendbaren Kondensationsprodukten aus Formaldehyd und mindestens Harnstoff, Melamin und Phenol, wobei der Molanteil von Phenol, bezogen auf die Summe von Melamin und Harnstoff bis zu 0,25 und das Molverhältnis von Harnstoff zu Melamin 0,2 : 1 bis 1 : 0,2 beträgt, bei einem Gesamtmolverhältnis von Formaldehyd zur Summe aus Melamin, Harnstoff und Phenol von etwa 1,1 bis 2, dadurch gekennzeichnet, daß man jeweils für sich

a) Phenol, Formaldehyd und bis zu 0,35 Mol eines Alkalisulfits oder -hydrogensulfits je mol Phenol zu einem Phenol-Formaldehyd-Kondensat sowie
b) Formaldehyd und Harnstoff im Molverhältnis von 2,5 oder weniger zu einem Harnstoff-Formaldehydkondensat umsetzt und
c) die Umsetzungsprodukte a) und b) zusammen ihrerseits mit Melamin und Formaldehyd in solchem Verhältnis umsetzt, daß sich die eingangs genannten Molverhältnisse von Melamin, Harnstoff, Phenol und Formaldehyd entweder unmittelbar ergeben oder
d) gegebenenfalls erst nach einer weiteren Umsetzung des gemäß c) erhaltenen Produkts mit Harnstoff in Mengen bis zu 75% der insgesamt vorgesehenen Harnstoffmenge.

2. Verfahren gemäß Anspruch 1, dadurch gekennzeichnet, daß man die Umsetzung (a) von Phenol, Formaldehyd und bis zu 0,35 Mol eines Alkalisulfits oder -hydrogensulfits bei einer Temperatur von 50 bis 150°C und bei einem pH-Wert von 7,5 bis 12 durchführt.

3. Verfahren gemäß Anspruch 1, dadurch gekennzeichnet, daß man die Weiterreaktion (c) der Umsetzungsprodukte mit Melamin und Formaldehyd bei einer Temperatur von 75 bis 150°C und bei einem pH-Wert von 7,5 bis 11 durchführt.

4. Verfahren gemäß Anspruch 1, dadurch gekennzeichnet, daß man die weitere Umsetzung (d) mit Harnstoff bei einer Temperatur von 10 bis 60°C und bei einem pH-Wert von 7,5 bis 11 durchführt.

## Claims

1. A process for the preparation of an aqueous solution of a condensate which can be used as a resin glue and comprises formaldehyde and at least urea, melamine and phenol, the molar ratio of phenol to the sum of melamine and urea being not more than 0.25 : 1 and the molar ratio of urea to melamine being from 0.2 : 1 to 1 : 0.2 for a total molar ratio of formaldehyde to the sum of melamine, urea and phenol of from about 1.1 to 2 : 1, wherein

(a) phenol, formaldehyde and not more than 0.35 mole of an alkali metal sulfite or bisulfite per mole of phenol are reacted to give a phenol-formaldehyde condensate, and

(b) formaldehyde and urea in a molar ratio of not more than 2.5 : 1 are reacted to give a urea-formaldehyde condensate, and

(c) the reaction products (a) and (b) together are in turn reacted with melamine and formaldehyde in such a ratio that the molar ratios of melamine, urea, phenol and formaldehyde mentioned at the outset are either obtained directly or

(d) may be obtained only after the product obtained according to (c) is reacted further with urea in an amount of not more than 75% of the total amount of urea intended.

2. A process as claimed in claim 1, wherein the reaction (a) of phenol, formaldehyde and not more than 0.35 mole of an alkali metal sulfite or bisulfite is carried out at from 50 to 150°C and at a pH of from 7.5 to 12.

3. A process as claimed in claim 1, wherein the further reaction (c) of the reaction products with melamine and formaldehyde is carried out at from 75 to 150°C and at a pH of from 7.5 to 11.

4. A process as claimed in claim 1, wherein the further reaction (d) with urea is carried out at from 10 to 60°C and at a pH of from 7.5 to 11.

## Revendications

1. Procédé pour la préparation de solutions aqueuses de produits de condensation utilisables comme résines collantes et formés à partir de formaldéhyde et au moins d'urée, de mélamine et de phénol, la part molaire de phénol, par rapport à la somme de la mélamine et de l'urée, pouvant aller jusqu'à 0,25 et le rapport molaire de l'urée à la mélamine étant compris entre 0,2 : 1 et 1 : 0,2 pour un rapport molaire total du formaldéhyde à la somme de la mélamine, de l'urée et du phénol d'environ 1,1 à 2, caractérisé en ce que

a) l'on fait réagir d'une part du phénol, du formaldéhyde et jusqu'à 0,35 mol d'un sulfite ou hydrogénosulfite alcalin par mol de phénol, pour obtenir un produit de condensation phénolformaldéhyde,

b) l'on fait réagir d'autre part du formaldéhyde et de l'urée dans un rapport molaire de 2,5 ou moins, pour obtenir un produit de condensation urée-formaldéhyde,

c) l'on fait réagir conjointement les produits de réaction (a) et (b) avec de la mélamine et du formaldéhyde dans un rapport tel que les rapports molaires sus-mentionnés de la mélamine, de l'urée, du phénol et du formaldéhyde en résultent, soit directement, soit

d) le cas échéant, seulement après une nouvelle réaction du produit obtenu en (c) avec de l'urée dans des quantités pouvant aller jusqu'à 75% de la quantité d'urée prévue au total.

2. Procédé selon la revendication 1, caractérisé en ce qu'on mène la réaction (a) du phénol, du formaldéhyde et de jusqu'à 0,35 mol d'un sulfite ou hydrogénosulfite d'alcali, à une température de 50 à 150°C et à un pH de 7,5 à 12.

3. Procédé selon la revendication 1, caractérisé en ce qu'on mène la réaction supplémentaire (c) des produits de réaction avec la mélamine et le formaldéhyde, à une température de 75 à 150°C et à un pH de 7,5 à 11.

4. Procédé selon la revendication 1, caractérisé en ce qu'on mène la réaction supplémentaire (d) avec l'urée, à une température de 10 à 60°C et à un pH de 7,5 à 11.